# EUROPEAN PATENT SPECIFICATION

(11) **EP 4 497 971 B1**
(45) Date of publication and mention of the grant of the patent: **18.02.2026**
(21) Application number: 24176908.2
(22) Date of filing: 20.05.2024
(51) Int. Cl.: F16H 7/14

(54) **A CHAIN TENSIONING DEVICE, AND A SWINGARM AND A MOTORBIKE COMPRISING THE DEVICE**
KETTENSPANNVORRICHTUNG UND SCHWENKARM UND MOTORRAD MIT DER VORRICHTUNG
DISPOSITIF TENDEUR DE CHAÎNE, ET BRAS OSCILLANT ET MOTOCYCLETTE COMPRENANT LE DISPOSITIF

(30) Priority: 28.07.2023 EP 23188474
(43) Date of publication of application: 29.01.2025
(73) Proprietor: BKW Holding B.V., 3741 LM Baarn (NL)
(72) Inventor: KLEIN WOOLTHUIS, Harmen Frederik, 3741 LM Baarn (NL); KLEIN WOOLTHUIS, Bonne, 3741 LM Baarn (NL)
(74) Representative: Plaggenborg, Menko Bernard

(56) References cited:
- EP-A1- 2 998 214
- JP-A- 2013 049 365
- US-A1- 2023 091 351
- US-B2- 7 520 361

## Description

The present invention relates to a chain tensioning device according to the preamble of claim 1. The invention also relates to a motorbike comprising the device.

It is known in the art to use a chain tensioning device to set the chain tension of an apparatus, for example a motorbike. Hereafter, the term motorbike will be used mainly, where other apparatuses applying chains the tension of which can be set, are meant as well.

Usually, setting the chain tension is done by means of a simple threaded rod connected to a body for adjusting the distance from the wheel axis with respect to the driving gear of the chain. Usually this is done by adjusting an adjusting nut at a tail end of the swing arm of the motorbike. Chain tension is an important factor when using an apparatus, for example a motorbike, applying a chain driven wheel for drive and movement of the apparatus. A correct chain tension prevents the chain from falling and slackening, improves safety and durability, and neutralizes or even eliminates shortcomings of the tire.

Such known chain tensioning device provides the effect that the chain tension is set at a predetermined level.

A disadvantage of such known device is found in the inadequacy of indicating what tension is set. A separate tool must be used for measuring the chain tension. Also, since a swing arm comprises two sides, each with its own setting device, it is impossible to simply adjust the setting device at both sides and assume the chain tension is set correctly and at the same time ensuring an aligned wheel.

The invention aims at providing an improved chain tensioning device of the kind mentioned in the preamble.

The invention further aims at providing a chain tensioning device that eases setting a correct position of the wheel axis at both sides of a swing arm ensuring a correctly aligned wheel.

The invention also aims at providing a chain tensioning device allowing a user to simply increase or decrease the chain tension with a predetermined amount without the need for using a measuring tool.

So as to obtain at least one of the above mentioned aims, the invention provides a chain tensioning device as mentioned in claim 1. This chain tensioning device has the advantage that a user simply can adjust the chain tension by turning the tensioning rod and counting clicks generated when the pressure elements are received in the at least one notch upon turning the tensioning rod.

It has also shown that the device according to the present invention requires no lock nut since the spring loaded pressure element keeps the rod in a fixed position. Such synergistic effect is very advantageous.

The invention therefore relates to a chain tensioning device for an apparatus comprising a chain driven wheel, comprising a body with a first through hole for receiving an axis of the chain driven wheel, the body further comprising a recess for receiving at least a part of a tensioning rod, said recess being substantially perpendicular with respect to said through hole, said tensioning rod being rotatable along its longitudinal axis within said recess, the tensioning rod maintaining a fixed axial position when rotated about the longitudinal axis, wherein the tensioning rod comprises at least one notch in its outer circumference which can be aligned with a passage in the body, and wherein the passage comprises a spring loaded pressure element, wherein said pressure element is at least partly received in the at least one notch when the notch and the passage are aligned, **characterized in that** the recess for receiving at least a part of a tensioning rod comprises a seal, preferably an annular seal around the tensioning rod and sealing the rod against an inner wall of the recess.

As a matter of fact, after setting and adjusting the chain tension, the axis of the chain driven wheel may be mounted to the swing arm in a regular manner, by means of a common bolt and nut connection.

US 7 520 361 B2 provides a tensioning device according to the preamble of claim 1.

The present invention provides the advantage over this known tensioning device, that it may be embodied such that it is operable even when the device is completely covered in dirt. Also, the device according to the invention can be simply sealed.

It is preferred that the tensioning rod comprises at least two notches, preferably three notches and more preferably four notches in its outer circumference. This increases the accuracy of the adjustment of the chain tension, since each time the spring loaded pressure elements is received in a notch, the user will hear or experience a click, knowing that he has turned the tensioning rod for a predetermined amount. By counting a same amount of clicks at the left and the right side of the swing arm, the user will securely know that the wheel is still aligned correctly and that the chain tension has been altered by a specific amount.

It is preferred that the tensioning rod comprises outer thread for coupling same with a frame part of the apparatus comprising the chain driven wheel and for adjusting and setting the position of the body with respect to the frame part. As a result, the position of the body with respect to the apparatus is known which increases accuracy of the chain tension. The frame part may advantageously be a swing arm of a motor bike.

The spring loaded pressure element is received in the notch in the outer circumference of the tensioning rod. As a result, a force is required to push the pressure element out of the notch in order to rotate or turn the tensioning rod. If such force is relatively weak if a single pressure element is received in a notch, a higher force will be required if the device comprises a tensioning rod with at least two notches in its outer circumference and also comprises a similar amount or spring loaded pressure elements. The notches and the pressure elements are preferably symmetrically aligned along the outer circumference of the tensioning rod, such that all pressure elements are aligned with a respective notch at the same time. It therefore is preferred if the body comprises at least two passages, each being provided with a spring loaded pressure element.

If a single pressure element suffices for providing sufficient force to retain the tensioning rod at a predetermined position, the accuracy can be increased doubled, when two pressure elements are provided. In order to obtain a constant and regular adjustment of the tensioning rod, the pressure elements should be placed at mutual position that differ 180 degrees divided by the number of pressure elements. In such embodiment, when rotating the tensioning rod, a first pressure element will be received in a notch in a first rotational position of the tensioning rod whereas the second pressure element will be received in the notch in the subsequent second rotational position of the tensioning rod. The invention therefore also relates to a device according to the invention, wherein the tensioning rod comprises at least a number of X notches, symmetrically aligned on its outer circumference, with X being an integer of 1 or more, which can be aligned with a passage in the body, and wherein the body comprises two passages each provided with a spring loaded pressure element, positioned at (180/X) degrees with respect to the rod's circumference.

If on the other hand, it is preferred that at least two notches each receive a pressure element, it is preferred if the tensioning rod comprises at least a number of X notches, with X being an integer of 2 or more, symmetrically aligned on its outer circumference, which can be aligned with a passage in the body, and wherein the body comprises two passages each provided with a spring loaded pressure element, positioned at (360/X) degrees with respect to the rod's circumference.

It is especially preferred for the tensioning rod to comprise a control device for controlling and adjusting the chain tension by rotating the tensioning rod and adjusting and setting the position of the body with respect to a frame part of the apparatus. This may be a fixed nut shaped element on the tensioning rod such that the tensioning rod can be rotated by means of an open-end wrench, which is a very simple solution, and in which case it is preferred that the control device comprises an external surface suitable for engagement by a wrench, connected or provided to the outer circumference of the tensioning rod at a position outside the body.

Another example of a suitable control device is a recess for receiving a tool, for example an Allen key, a Torx key, a Phillips screwdriver, or a regular flat head screwdriver, for adjusting the tensioning rod.

By applying tools that are commonly used in the art, use of the device according to the invention is easy for every technician, and engineer. It is therefore preferred that the spring loaded pressure element is a spring loaded ball.

More in particular, it is preferred if the spring loaded pressure element and the notch together form a ball lock, preventing or at least partially impeding the tensioning rod to rotate along its longitudinal axis.

A sturdy embodiment for use on a motorbike, more in particular an off-road motorbike, is obtained when the tensioning rod comprises two mutually coupled parts, a first part at least partly positioned between a wall portion of the body and the frame part of the apparatus, and a second part at least partly positioned at an opposite side of said wall portion, wherein a bridging part between said first part and said second part is positioned in a bridging passage of said body, and wherein both said bridging part and said bridging passage have a smaller diameter than said first part and said second part.

In this embodiment, it is especially preferred if the bridging part is freely rotatable within said bridging passage, which allows for an uninterrupted and smooth setting and adjustment of the chain tensioning device.

A seal may be provided in the position at the said opposite side of said wall portion, for example at or near the bridging passage of said body.

According to a further embodiment, the invention relates to a swingarm for carrying a chain driven wheel, comprising a device according to the invention for aligning the wheel with respect to the swingarm.

The invention further relates to a motorbike with a chain driven wheel, comprising the device according to the invention, and more specifically to the number of preferred embodiments as mentioned above and as described in any of claims 2-12 at its swing arm or chainstay.

Hereafter, the invention will be further described by means of a drawing. The drawing shows in:
Fig. 1 a device according to the invention incorporated in a tail-end of a swingarm,
Fig. 2 the body and tensioning rod of the device,
Fig. 3 a part of the body of the device,
Fig. 4 an impression of a spring loaded pressure element,
Fig. 5 a detailed view of the spring loaded pressure element,
Fig. 6 a partially through cut of a device according to the invention incorporated in a tail-end of a swingarm, and
Fig. 7 an end portion of the tensioning rod.

The same and similar parts and features have been denoted by the same reference numerals in the figures. However, for ease of understanding the figures, not all parts that are required for a practical embodiment have been shown in the figures.

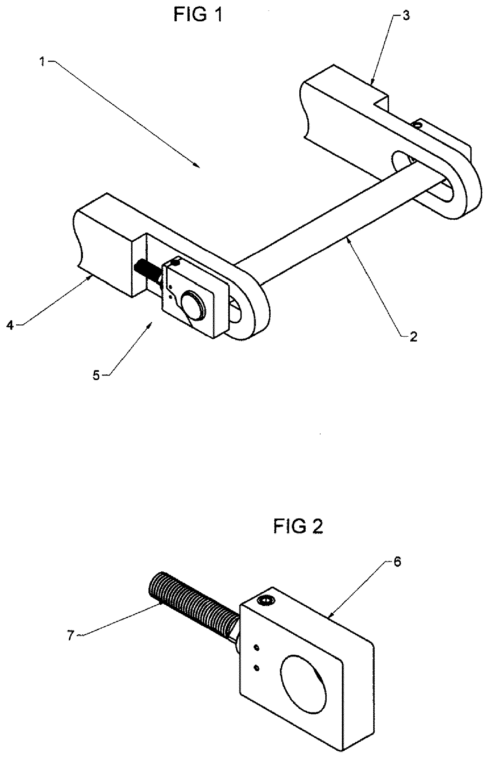

Fig. 1 shows a part of an apparatus 1, in this particular case a part of a motorbike 1, comprising an axis 2, a swingarm 3, 4, and the device 5 according to the invention. The device 5, in more detail shown in Fig. 2, comprises a body 6 and a tensioning rod 7. The tensioning rod 7 is rotatable with respect to the body 6 along its longitudinal axis. The tensioning rod 7 has a fixed axial position with respect to the body 6, such that upon rotation of the tensioning rod with respect to the body 6, its position will not change.

The tensioning rod is provided with thread, and screwed into an internally threaded hole of a part of the apparatus, for example a swingarm of a motorbike, such that rotation of the tensioning rod induces a movement of the body with respect to the said apparatus. The tension on a chain guided along a gearwheel or sprocket on the axis 2 can thus be adjusted, as a person skilled in the art will understand.

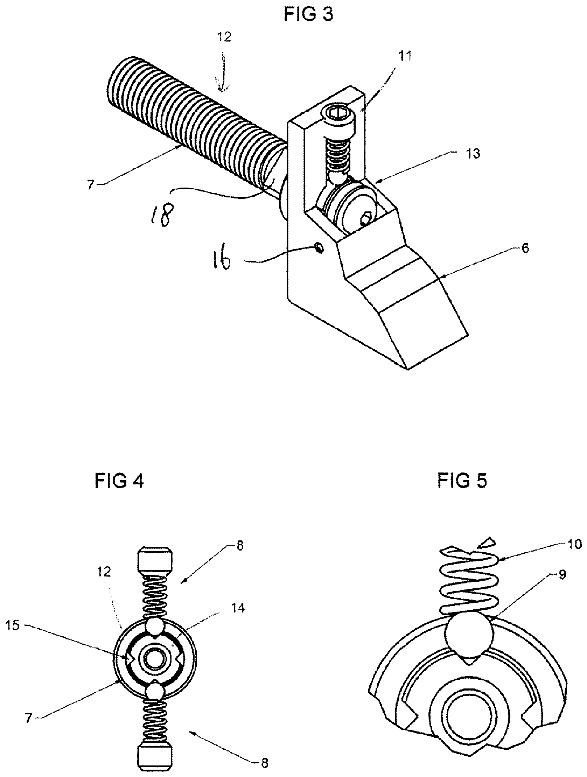

In Fig. 3 a more detailed view of the body and the tensioning rod is shown. The body comprises a wall 11, wherein a first part 12 of the tensioning rod comprising the thread is positioned at a first side of said wall 11. The tensioning rod 7 comprises two mutually coupled parts 12, 13, wherein said parts 12, 13 may be comprised of a single body. The first part is placed outside the body 6 whereas part 13 is placed within body 6. The second part 13 is at least partly positioned at an opposite side of said wall portion 11. A bridging part 14 (see Fig. 4) between said first part 12 and said second part 13 is positioned in a bridging passage (not shown in the drawing) of said body 6, and wherein both said bridging part 14 and said bridging passage have a smaller diameter than said first part 12 and said second part 13. After mutually coupling said parts 12, 13 the tensioning rod is rotatably fitted into and coupled to body 6.

Fig. 4 shows the notches in the circumferential surface of the tensioning rod 7, wherein two ball locks 8 as spring loaded pressure elements 8 are each received in a notch 15.

Fig. 5 shows an even more detailed view of the ball locks 8 with a spring 10 and the pressure element 9, comprised of a ball 9, received in the notch 15.

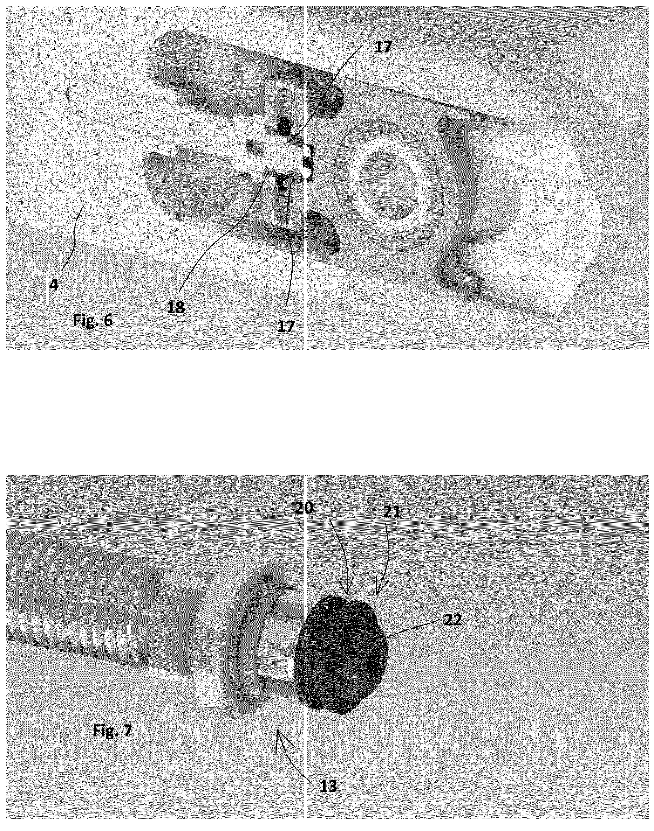

Fig. 3 indicates an opening 16 in the side wall of the body 6. A securing rod 17 may be inserted in the opening 16 after the second part 13 has been positioned maximally inside the body 6. The securing rod 17 takes place inside a circular recess 20 in an outer surface of the second part, axially displaced with respect to the part of the second part 13 comprising the notches in its outer circumference. The securing rod 17 ensures a fixed coupling of the second part inside the body 6. Whereas Fig. 3 shows a single opening 16, another opening 16 may be provided in the body, so as to insert two securing rods 17 at opposite sides of the second part 13, as clearly shown in Fig. 6.

The circular recess 20 may be provided in a ring 21 or the like that is connected to the second part 13 by means of a bolt 22, as clearly indicated in Fig. 7.

A seal 18 may further be provided so as to ensure an efficient and long-lasting functioning of the chain tensioner according to the present invention.

An existing apparatus 1, for example a swing arm 3, 4 of a motor-bike, may be retro-fitted with the chain tensioner according to the present invention. To that end, a threaded opening should be provided in the apparatus, for example in the tail end of the swing-arm, for receiving the tensioning rod 7 of the first part 12.

Preferably, the tensioning rod is operable through a standard wrench, for example by means of an external square or hexagonal contact surface 19. This contact surface 19 may be provided at the tensioning rod, i.e. the first part 12 of the device according to the present invention, outside and close to the body 6. This results in a device the operable part of which is contained within the surrounding of the swing arm. Hence, there is a minimal chance of damage during use of the device which especially in off road motorbike races is of utmost importance. Also, any dirt that has gathered on the contact surface 19 can be easily removed, for example by simply placing the wrench on the said contact surface 19.

The invention is not limited to the embodiments as mentioned above and as shown in the drawings. The invention also relates to all combinations of features described here independently of each other. The invention is limited by the claims only.

## Claims

1. A chain tensioning device (5) for an apparatus (1) comprising a chain driven wheel, comprising a body (6) with a first through hole for receiving an axis (2) of the chain driven wheel, the body (6) further comprising a recess for receiving at least a part of a tensioning rod (7), said recess being substantially perpendicular with respect to said through hole, said tensioning rod (7) being rotatable along its longitudinal axis within said recess, the tensioning rod (7) maintaining a fixed axial position with respect to the body (6) when rotated about the longitudinal axis, wherein the tensioning rod (7) comprises at least one notch (15) in its outer circumference which can be aligned with a passage in the body (6), and wherein the passage comprises a spring loaded pressure element (8), wherein said pressure element is at least partly received in the notch (15) when the notch and the passage are aligned, **characterized in that** the recess for receiving at least part of the tensioning rod (7) comprises a seal (18), preferably an annular seal around the tensioning rod (7) and sealing the rod against an inner wall of the recess.

2. A device (5) according to claim 1, wherein the tensioning rod (7) comprises at least two notches (15), preferably three notches and more preferably four notches in its outer circumference.

3. A device (5) according to claim 1, wherein the tensioning rod (7) comprises outer thread for coupling same with a frame part of the apparatus (1) comprising the chain driven wheel and for adjusting and setting the position of the body with respect to the frame part.

4. A device (5) according to claim 1, 2 or 3, wherein the body (6) comprises at least two passages, each being provided with a spring loaded pressure element (8).

5. A device (5) according to claim 4, wherein the tensioning rod (7) comprises at least a number of X notches, symmetrically aligned on its outer circumference, with X being an integer of 1 or more, which can be aligned with a passage in the body (6), and wherein the body (6) comprises two passages each provided with a spring loaded pressure element (8), positioned at (180/X) degrees with respect to the rod's circumference.

6. A device (5) according to claim 4, wherein the tensioning rod (7) comprises at least a number of X notches (15), with X being an integer of 2 or more, symmetrically aligned on its outer circumference, which can be aligned with a passage in the body (6), and wherein the body (6) comprises two passages each provided with a spring loaded pressure element (8), positioned at (360/X) degrees with respect to the rod's circumference.

7. A device (5) according to claim 1, wherein the tensioning rod (7) comprises a control device for controlling and adjusting the chain tension by rotating the tensioning rod (7) and adjusting and setting the position of the body (6) with respect to a frame part of the apparatus (1).

8. A device (5) according to claim 7, wherein the control device comprises an external surface suitable for engagement by a wrench connected or provided to the outer circumference of the tensioning rod at a position outside the body (6).

9. A device (5) according to claim 1, wherein the spring loaded pressure element (8) is a spring loaded ball (9).

10. A device (5) according to claim 1, wherein the spring loaded pressure element (8) and the notch (15) together form a ball lock, at least partially impeding the tensioning rod (7) to rotate along its longitudinal axis.

11. A device (5) according to claim 1, wherein the tensioning rod (7) comprises two mutually coupled parts, a first part at least partly positioned between a wall portion of the body (6) and the frame part of the apparatus (1), and a second part at least partly positioned at an opposite side of said wall portion, wherein a bridging part (14) between said first part (12) and said second part (13) is positioned in a bridging passage of said body, and wherein both said bridging part (14) and said bridging passage have a smaller diameter than said first part and said second part.

12. A device (5) according to claim 1, wherein the bridging part (14) is freely rotatable within said bridging passage.

13. A swingarm for carrying a chain driven wheel, comprising a device (5) according to any of claims 1-12 for aligning the wheel with respect to the swingarm.

14. A motorbike with a chain driven wheel, comprising a device (5) according to any of claims 1-12 at its swing arm.

## Patentansprüche

1. Kettenspannvorrichtung (5) für ein Gerät (1) mit einem kettengetriebenen Rad, welches einen Körper (6) mit einer ersten Durchgangsbohrung zur Aufnahme einer Achse (2) des kettengetriebenen Rades umfasst, worin der Körper (6) ferner eine Aussparung zur Aufnahme mindestens eines Teils einer Spannstange (7) umfasst, worin die Aussparung im Wesentlichen senkrecht zu der Durchgangsbohrung ist, worin die Spannstange (7) innerhalb der Aussparung um ihre Längsachse drehbar ist, wobei die Spannstange (7) bei Drehung um die Längsachse eine feste axiale Position in Bezug auf den Körper (6) beibehält, worin die Spannstange (7) mindestens eine Kerbe (15) in ihrem Außenumfang aufweist, die mit einem Durchgang im Körper (6) ausgerichtet werden kann, und worin der Durchgang ein federbelastetes Druckelement (8) umfasst, worin das Druckelement zumindest teilweise in der Kerbe (15) aufgenommen ist, wenn die Kerbe und der Durchgang ausgerichtet sind, **dadurch gekennzeichnet, dass** die Aussparung zur Aufnahme zumindest eines Teils der Spannstange (7) eine Dichtung (18) umfasst, vorzugsweise eine ringförmige Dichtung um die Spannstange (7) herum, die die Stange gegenüber einer Innenwand der Aussparung abdichtet.

2. Vorrichtung (5) nach Anspruch 1, worin die Spannstange (7) mindestens zwei Kerben (15), vorzugsweise drei Kerben und noch bevorzugter vier Kerben in ihrem Außenumfang aufweist.

3. Vorrichtung (5) nach Anspruch 1, worin die Spannstange (7) ein Außengewinde zum Verbinden derselben mit einem Rahmenteil des Geräts (1), das das kettengetriebene Rad umfasst, und zum Einstellen und Festlegen der Position des Körpers in Bezug auf das Rahmenteil umfasst.

4. Vorrichtung (5) nach Anspruch 1, 2 oder 3, worin der Körper (6) mindestens zwei Durchgänge aufweist, die jeweils mit einem federbelasteten Druckelement (8) versehen sind.

5. Vorrichtung (5) nach Anspruch 4, worin die Spannstange (7) mindestens eine Anzahl von X Kerben umfasst, die symmetrisch auf ihrem Außenumfang angeordnet sind, worin X eine ganze Zahl von 1 oder mehr ist, die mit einem Durchgang im Körper (6) ausgerichtet werden können, und worin der Körper (6) zwei Durchgänge umfasst, die jeweils mit einem federbelasteten Druckelement (8) versehen sind, das in einem Winkel von (180/X) Grad zum Umfang der Stange angeordnet ist.

6. Vorrichtung (5) nach Anspruch 4, worin die Spannstange (7) mindestens eine Anzahl von X Kerben (15) umfasst, worin X eine ganze Zahl von 2 oder mehr ist, die symmetrisch auf ihrem Außenumfang ausgerichtet sind und mit einem Durchgang im Körper (6) ausgerichtet werden können, und worin der Körper (6) zwei Durchgänge umfasst, die jeweils mit einem federbelasteten Druckelement (8) versehen sind, das in einem Winkel von (360/X) Grad zum Umfang der Stange angeordnet ist.

7. Vorrichtung (5) nach Anspruch 1, worin die Spannstange (7) eine Steuervorrichtung zum Steuern und Einstellen der Kettenspannung durch Drehen der Spannstange (7) und Einstellen und Festlegen der Position des Körpers (6) in Bezug auf einen Rahmenteil des Geräts (1) umfasst.

8. Vorrichtung (5) nach Anspruch 7, worin die Steuervorrichtung eine Außenfläche umfasst, die zum Eingriff mit einem Schraubenschlüssel geeignet ist, der mit dem Außenumfang der Spannstange an einer Position außerhalb des Körpers (6) verbunden oder an diesem vorgesehen ist.

9. Vorrichtung (5) nach Anspruch 1, worin das federbelastete Druckelement (8) eine federbelastete Kugel (9) ist.

10. Vorrichtung (5) nach Anspruch 1, worin das federbelastete Druckelement (8) und die Kerbe (15) zusammen eine Kugelsperre bilden, die die Drehung der Spannstange (7) um ihre Längsachse zumindest teilweise verhindert.

11. Vorrichtung (5) nach Anspruch 1, worin die Spannstange (7) zwei miteinander verbundene Teile umfasst, einen ersten Teil, der zumindest teilweise zwischen einem Wandabschnitt des Körpers (6) und dem Rahmenteil des Geräts (1) angeordnet ist, und einen zweiten Teil, der zumindest teilweise auf einer gegenüberliegenden Seite des Wandabschnitts angeordnet ist, worin ein Brückenteil (14) zwischen dem ersten Teil (12) und dem zweiten Teil (13) in einem Brückendurchgang des Körpers angeordnet ist und worin sowohl der Brückenteil (14) als auch der Brückendurchgang einen kleineren Durchmesser als der erste Teil und der zweite Teil aufweisen.

12. Vorrichtung (5) nach Anspruch 1, worin der Brückenteil (14) innerhalb des Brückendurchgangs frei drehbar ist.

13. Schwingarm zum Tragen eines kettengetriebenen Rades, mit einer Vorrichtung (5) nach einem der Ansprüche 1 bis 12 zum Ausrichten des Rades in Bezug auf den Schwingarm.

14. Motorrad mit einem kettengetriebenen Rad, mit einer Vorrichtung (5) gemäß einem der Ansprüche 1 bis 12 an dessen Schwingarm.

## Revendications

1. - Dispositif tendeur de chaîne (5) pour un appareil (1) comprenant une roue entraînée par chaîne, comprenant un corps (6) avec un premier trou traversant pour recevoir un axe (2) de la roue entraînée par chaîne, le corps (6) comprenant en outre un renfoncement pour recevoir au moins une partie d'une tige de tension (7), ledit renfoncement étant sensiblement perpendiculaire par rapport audit trou traversant, ladite tige de tension (7) étant apte à tourner le long de son axe longitudinal à l'intérieur dudit renfoncement, la tige de tension (7) conservant une position axiale fixe par rapport au corps (6) lorsqu'elle est tournée autour de l'axe longitudinal, la tige de tension (7) comprenant au moins une encoche (15) dans sa périphérie externe qui peut être alignée avec un passage dans le corps (6), et le passage comprenant un élément de pression chargé par ressort (8), ledit élément de pression étant au moins partiellement reçu dans l'encoche (15) lorsque l'encoche et le passage sont alignés, **caractérisé par le fait que** le renfoncement pour recevoir au moins une partie de la tige de tension (7) comprend un joint d'étanchéité (18), de préférence un joint d'étanchéité annulaire autour de la tige de tension (7) et scellant la tige contre une paroi interne du renfoncement.

2. - Dispositif (5) selon la revendication 1, dans lequel la tige de tension (7) comprend au moins deux encoches (15), de préférence trois encoches et de façon davantage préférée quatre encoches dans sa périphérie externe.

3. - Dispositif (5) selon la revendication 1, dans lequel la tige de tension (7) comprend un filetage externe pour coupler celle-ci à une partie cadre de l'appareil (1) comprenant la roue entraînée par chaîne et pour ajuster et régler la position du corps par rapport à la partie cadre.

4. - Dispositif (5) selon la revendication 1, 2 ou 3, dans lequel le corps (6) comprend au moins deux passages, chacun comportant un élément de pression chargé par ressort (8).

5. - Dispositif (5) selon la revendication 4, dans lequel la tige de tension (7) comprend au moins un nombre de X encoches, alignées symétriquement sur sa périphérie externe, X étant un entier de 1 ou plus, qui peuvent être alignées avec un passage dans le corps (6), et dans lequel le corps (6) comprend deux passages chacun comportant un élément de pression chargé par ressort (8), positionné à (180/X) degrés par rapport à la périphérie de la tige.

6. - Dispositif (5) selon la revendication 4, dans lequel la tige de tension (7) comprend au moins un nombre de X encoches (15), X étant un entier de 2 ou plus, alignées symétriquement sur sa périphérie externe, qui peuvent être alignées avec un passage dans le corps (6), et dans lequel le corps (6) comprend deux passages chacun comportant un élément de pression chargé par ressort (8), positionné à (360/X) degrés par rapport à la périphérie de la tige.

7. - Dispositif (5) selon la revendication 1, dans lequel la tige de tension (7) comprend un dispositif de commande pour commander et ajuster la tension de chaîne par rotation de la tige de tension (7) et ajustement et réglage de la position du corps (6) par rapport à une partie cadre de l'appareil (1).

8. - Dispositif (5) selon la revendication 7, dans lequel le dispositif de commande comprend une surface externe apte à être engagée par une clé connectée ou disposée à la périphérie externe de la tige de tension à une position à l'extérieur du corps (6).

9. - Dispositif (5) selon la revendication 1, dans lequel l'élément de pression chargé par ressort (8) est une bille chargé par ressort (9).

10. - Dispositif (5) selon la revendication 1, dans lequel l'élément de pression chargé par ressort (8) et l'encoche (15) forment ensemble un verrouillage à bille, empêchant au moins partiellement la tige de tension (7) de tourner le long de son axe longitudinal.

11. - Dispositif (5) selon la revendication 1, dans lequel la tige de tension (7) comprend deux parties couplées mutuellement, une première partie au moins partiellement positionnée entre une partie paroi du corps (6) et la partie cadre de l'appareil (1), et une seconde partie au moins partiellement positionnée sur un côté opposé de ladite partie paroi, une partie de pontage (14) entre ladite première partie (12) et ladite seconde partie (13) étant positionnée dans un passage de pontage dudit corps, et ladite partie de pontage (14) et ledit passage de pontage ayant tous deux un diamètre inférieur à celui de ladite première partie et de ladite seconde partie.

12. - Dispositif (5) selon la revendication 1, dans lequel la partie de pontage (14) est apte à tourner librement à l'intérieur du passage de pontage.

13. - Bras oscillant pour porter une roue entraînée par chaîne, comprenant un dispositif (5) selon l'une quelconque des revendications 1 à 12 pour aligner la roue par rapport au bras oscillant.

14. - Moto avec roue entraînée par chaîne, comprenant un dispositif (5) selon l'une quelconque des revendications 1 à 12 à son bras oscillant.
